(19) Europäisches Patentamt
European Patent Office
Office européen des brevets

(11) **EP 3 401 522 B1**

(12) **EUROPEAN PATENT SPECIFICATION**

(45) Date of publication and mention
of the grant of the patent:
**12.06.2019 Bulletin 2019/24**

(51) Int Cl.:
*F01N 3/20* (2006.01)    *F01N 3/08* (2006.01)
*F01N 13/00* (2010.01)   *B01D 53/94* (2006.01)
*F01N 9/00* (2006.01)    *F01N 11/00* (2006.01)

(21) Application number: **18171068.2**

(22) Date of filing: **07.05.2018**

(54) **EXHAUST GAS CONTROL SYSTEM FOR INTERNAL COMBUSTION ENGINE AND METHOD OF CONTROLLING EXHAUST GAS CONTROL SYSTEM FOR INTERNAL COMBUSTION ENGINE**

ABGASSTEUERUNGSSYSTEM FÜR EINEN VERBRENNUNGSMOTOR UND VERFAHREN ZUR STEUERUNG DES ABGASSTEUERUNGSSYSTEMS FÜR EINEN VERBRENNUNGSMOTOR

SYSTÈME DE COMMANDE DE GAZ D'ÉCHAPPEMENT POUR MOTEUR À COMBUSTION INTERNE ET PROCÉDÉ DE COMMANDE DE SYSTÈME DE COMMANDE DE GAZ D'ÉCHAPPEMENT POUR MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2017 JP 2017094158**

(43) Date of publication of application:
**14.11.2018 Bulletin 2018/46**

(73) Proprietor: **TOYOTA JIDOSHA KABUSHIKI KAISHA**
**Toyota-shi, Aichi-ken 471-8571 (JP)**

(72) Inventor: **OOMUKAI, Rio**
**TOYOTA-SHI, AICHI-KEN, 471-8571 (JP)**

(74) Representative: **Cabinet Beau de Loménie**
**158, rue de l'Université**
**75340 Paris Cedex 07 (FR)**

(56) References cited:
**EP-A1- 3 115 583      US-A1- 2015 226 105**
**US-A1- 2016 230 628**

**Description**

BACKGROUND OF THE INVENTION

1. Field of the Invention

The invention relates to an exhaust gas control system for an internal combustion engine, and relates also to a method of controlling an exhaust gas control system for an internal combustion engine.

2. Description of Related Art

There is an exhaust gas control system for an internal combustion engine, which includes a NOx storage reduction (NSR) catalyst and a NOx selective catalytic reduction (SCR) catalyst that are arranged, in this order from the upstream side, on an exhaust passage for the internal combustion engine (see, for example, Japanese Unexamined Patent Application Publication No. 2016-223441 (JP 2016-223441 A) and US Patent Application Publication No. 2016/0230628 (US 2016/0230628 A1)).

SUMMARY OF THE INVENTION

In the exhaust gas control system for an internal combustion engine, a NOx sensor configured to detect a concentration of NOx in the exhaust gas flowing into the SCR catalyst and a NOx sensor configured to detect a concentration of NOx in the exhaust gas flowing out of the SCR catalyst may be provided to evaluate the NOx reducing performance of the SCR catalyst based on the values detected by these NOx sensors. Specifically, the NOx reducing performance of the SCR catalyst is evaluated to be higher as the concentration of NOx in the exhaust gas flowing out of the SCR catalyst is lower, by a larger amount, than the concentration of NOx in the exhaust gas flowing into the SCR catalyst, in other words, as the difference between the concentration of NOx in the exhaust gas flowing into the SCR catalyst and the concentration of NOx in the exhaust gas flowing out of the SCR catalyst is larger.

However, when the NSR catalyst is disposed upstream of the SCR catalyst as described above, a large amount of NOx in the exhaust gas is reduced by the NSR catalyst and thus the concentration of NOx in the exhaust gas flowing into the SCR catalyst may be low. In this case, the difference between the concentration of NOx in the exhaust gas flowing into the SCR catalyst and the concentration of NOx in the exhaust gas flowing out of the SCR catalyst is small, and therefore the NOx reducing performance of the SCR catalyst may not be accurately evaluated. Further, the value detected by each NOx sensor may vary within tolerance. Therefore, it may not be possible to accurately determine whether the difference between the concentration of NOx in the exhaust gas flowing into the SCR catalyst and the concentration of NOx in the exhaust gas flowing out of the SCR catalyst is attributable to the actual NOx reducing performance of the SCR catalyst or is attributable to the variations in the values detected by the NOx sensors. For this reason, it may not be possible to accurately evaluate the NOx reducing performance of the SCR catalyst.

The invention provides an exhaust gas control system for an internal combustion engine, the exhaust gas control system being configured to enable accurate evaluation of the NOx reducing performance of a NOx selective catalytic reduction catalyst.

A first aspect of the invention relates to an exhaust gas control system for an internal combustion engine according to appended claim 1. The exhaust gas control system includes a first catalyst, a second catalyst, a first NOx sensor, a second NOx sensor, and an electronic control unit. The first catalyst is disposed on an exhaust passage for the internal combustion engine. The first catalyst is a NOx storage reduction catalyst. The second catalyst is disposed on the exhaust passage at a position downstream of the first catalyst. The second catalyst is a NOx selective catalytic reduction catalyst. The first NOx sensor is mounted on the exhaust passage at a position between the first catalyst and the second catalyst. The first NOx sensor is configured to detect a concentration of NOx in exhaust gas flowing into the second catalyst. The second NOx sensor is mounted on the exhaust passage at a position downstream of the second catalyst. The second NOx sensor is configured to detect a concentration of NOx in the exhaust gas flowing out of the second catalyst. The electronic control unit is configured to evaluate NOx reducing performance of the second catalyst based on a value detected by the first NOx sensor and a value detected by the second NOx sensor when an evaluation condition is satisfied. The evaluation condition is a condition that NOx is supplied to the second catalyst of which the temperature is within an activation temperature range and on which a reductant in an amount equal to or larger than an adsorption amount predetermined value has been adsorbed. The NOx supplied to the second catalyst is NOx that has been desorbed from the first catalyst due to an increase in a temperature of the first catalyst, the first catalyst storing NOx, up to a temperature equal to or higher than a desorption temperature at which desorption of NOx from the first catalyst starts.

With this configuration, the concentration of NOx in the exhaust gas flowing into the second catalyst can be increased by desorbing NOx from the first catalyst. Because the temperature of the second catalyst is within the activation temperature range and the amount of reductant adsorbed on the second catalyst is equal to or larger than the adsorption amount predetermined value, the second catalyst can exhibit the NOx reducing performance. When the evaluation condition is satisfied, the NOx reducing performance of the second catalyst is evaluated based on the values detected by the first and second NOx sensors. It is therefore possible to accurately evaluate the NOx reducing performance of the second catalyst.

In the exhaust gas control system described above, the electronic control unit may be configured to execute first determination control of determining whether an amount of NOx stored in the first catalyst is equal to or larger than a storage amount predetermined value. Further, the electronic control unit may be configured to execute second determination control of determining whether the temperature of the second catalyst is within the activation temperature range and determining whether the amount of reductant adsorbed on the second catalyst is equal to or larger than the adsorption amount predetermined value. Further, the electronic control unit may be configured to increase the temperature of the first catalyst such that the temperature of the first catalyst is equal to or higher than the desorption temperature, when an affirmative determination is made in each of both the first determination control and the second determination control. Further, the electronic control unit may be configured to execute third determination control of determining whether the temperature of the first catalyst is equal to or higher than the desorption temperature. Further, the electronic control unit may be configured to determine that the evaluation condition is satisfied and evaluate the NOx reducing performance of the second catalyst based on the value detected by the first NOx sensor and the value detected by the second NOx sensor, when an affirmative determination is made in the third determination control.

In the exhaust gas control system described above, the electronic control unit may be configured to execute fourth determination control of determining whether the first NOx sensor and the second NOx sensor are normally operating. Further, the electronic control unit may be configured to increase the temperature of the first catalyst, when an affirmative determination is made in each of all the first determination control, the second determination control, and the fourth determination control.

In the exhaust gas control system described above, the electronic control unit may be configured to execute fifth determination control of determining whether NOx storage performance of the first catalyst has been recovered by increasing the temperature of the first catalyst. Further, the electronic control unit may be configured to stop increasing the temperature of the first catalyst, when an affirmative determination is made in the fifth determination control.

A second aspect of the invention relates to a method of controlling an exhaust gas control system for an internal combustion engine according to appended claim 5. The exhaust gas control system includes a first catalyst, a second catalyst, a first NOx sensor, a second NOx sensor, and an electronic control unit. The first catalyst is mounted on an exhaust passage for the internal combustion engine. The first catalyst is a NOx storage reduction catalyst. The second catalyst is mounted on the exhaust passage at a position downstream of the first catalyst. The second catalyst is a NOx selective catalytic reduction catalyst. The first NOx sensor is disposed on the exhaust passage at a position between the first catalyst and the second catalyst. The first NOx sensor is configured to detect a concentration of NOx in exhaust gas flowing into the second catalyst. The second NOx sensor is disposed on the exhaust passage at a position downstream of the second catalyst. The second NOx sensor is configured to detect a concentration of NOx in the exhaust gas flowing out of the second catalyst. The method includes evaluating, by the electronic control unit, NOx reducing performance of the second catalyst based on a value detected by the first NOx sensor and a value detected by the second NOx sensor, when an evaluation condition is satisfied. The evaluation condition is a condition that NOx is supplied to the second catalyst of which the temperature is within an activation temperature range and on which a reductant in an amount equal to or larger than an adsorption amount predetermined value has been adsorbed. The NOx supplied to the second catalyst is NOx that has been desorbed from the first catalyst due to an increase in a temperature of the first catalyst, the first catalyst storing NOx, up to a temperature equal to or higher than a desorption temperature at which desorption of NOx from the first catalyst starts.

With this configuration, the concentration of NOx in the exhaust gas flowing into the second catalyst can be increased by desorbing NOx from the first catalyst. Because the temperature of the second catalyst is within the activation temperature range and the amount of reductant adsorbed on the second catalyst is equal to or larger than the adsorption amount predetermined value, the second catalyst can exhibit the NOx reducing performance. When the evaluation condition is satisfied, the NOx reducing performance of the second catalyst is evaluated based on the values detected by the first and second NOx sensors. It is therefore possible to accurately evaluate the NOx reducing performance of the second catalyst.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram schematically illustrating the configuration of an exhaust gas control system for an internal combustion engine according to an embodiment of the invention;

FIG. 2A is a graph illustrating the NOx reduction rate with respect to the temperature of a NOx storage reduction (NSR) catalyst;

FIG. 2B is a graph illustrating the NOx reduction rate with respect to the temperature of a selective catalytic reduction (SCR) catalyst;

FIG. 3 is a flowchart illustrating an example of evaluation control executed by an electronic control unit (ECU); and

FIG. 4 is a time-series chart illustrating a change in the temperature of the NSR catalyst due to execution of a temperature-increasing process, and also illustrating a change in the concentration of NOx in the exhaust gas at a position downstream of an outlet of the NSR catalyst.

DETAILED DESCRIPTION OF EMBODIMENTS

Hereinafter, example embodiments of the invention will be described in detail with reference to the accompanying drawings. For example, dimensions, materials, shapes, and relative positions of elements that will be described in the following embodiments are not intended to limit the scope of the invention unless otherwise stated.

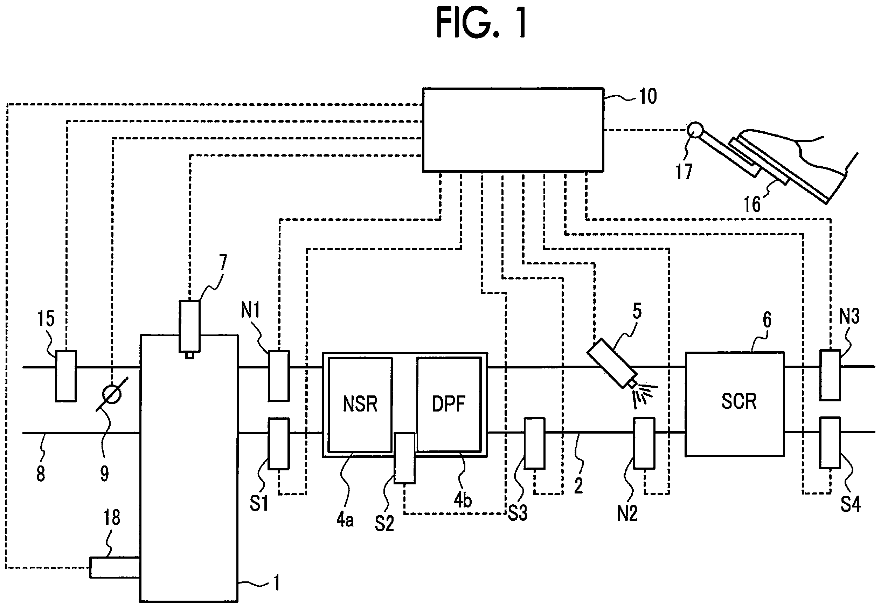

FIG. 1 is a diagram schematically illustrating the configuration of an exhaust gas control system for an internal combustion engine 1 according to an embodiment of the invention. In the present embodiment, the internal combustion engine 1 is a diesel engine. However, the internal combustion engine 1 may be a gasoline engine. The internal combustion engine 1 is mounted in, for example, a vehicle. The exhaust gas control system for the internal combustion engine 1 includes an exhaust passage 2, a NOx storage reduction catalyst 4a (hereinafter, referred to as "NSR catalyst 4a"), a diesel particulate filter 4b (hereinafter, referred to as "DPF 4b"), a reductant supply valve 5, a NOx selective catalytic reduction catalyst 6 (hereinafter, referred to as "SCR catalyst 6"), a NOx sensor N2, a NOx sensor N3, and an electronic control unit (ECU) 10. The exhaust passage 2 is connected to the internal combustion engine 1. The NSR catalyst 4a, the DPF 4b, the reductant supply valve 5, and the SCR catalyst 6 are arranged, in this order from the upstream side, on the exhaust passage 2.

The NSR catalyst 4a stores NOx in the exhaust gas, when the concentration of oxygen in the exhaust gas flowing into the NSR catalyst 4a is high, that is, when the air-fuel ratio of the exhaust gas is a lean air-fuel ratio. The NSR catalyst 4a desorbs NOx that has been stored therein, when the concentration of oxygen in the exhaust gas flowing into the NSR catalyst 4a is low and reducing components, such as hydrocarbon and carbon monoxide, are contained in the exhaust gas, in other words, when the air-fuel ratio of the exhaust gas is a stoichiometric air-fuel ratio or a rich air-fuel ratio. A reductant supplied to the NSR catalyst 4a is HC or CO, which is unburned fuel discharged from the internal combustion engine 1.

The DPF 4b has a porous ceramic structure including a plurality of cells. In the DPF 4b, upstream ends and downstream ends of the cells that are adjacent to each other are sealed in a staggered manner. More specifically, some of the cells have sealed upstream ends and open downstream ends, the remaining cells have open upstream ends and sealed downstream ends, and the cells having the sealed upstream ends alternate with the cells having the sealed downstream ends. The exhaust gas flows into the cells of the DPF 4b, which have the open upstream ends. Then, the exhaust gas passes through porous walls serving as partitions between the cells that are adjacent to each other. While the exhaust gas passes through the porous walls, particulate matter (PM) in the exhaust gas is trapped in the DPF 4b. The DPF 4b supports precious metal, such as platinum, and the precious metal promotes an oxidation reaction of the accumulated PM during a DPF regenerating process.

A reductant is adsorbed on the SCR catalyst 6, and the SCR catalyst 6 selectively reduces NOx using the reductant. The reductant supplied to the SCR catalyst 6 is $NH_3$ (ammonia) that is produced in the NSR catalyst 4a or $NH_3$ that is produced from a urea aqueous solution injected from the reductant supply valve 5. The urea aqueous solution injected from the reductant supply valve 5 is hydrolyzed into $NH_3$ by heat of the exhaust gas or heat from the SCR catalyst 6.

An exhaust gas temperature sensor S1 and a NOx sensor N1 are mounted on the exhaust passage 2 at positions upstream of the NSR catalyst 4a. The temperature of the exhaust gas flowing into the NSR catalyst 4a can be detected by the exhaust gas temperature sensor S1, and the concentration of NOx in the exhaust gas flowing into the NSR catalyst 4a can be detected by the NOx sensor N1. An exhaust gas temperature sensor S2 is disposed at a position between the NSR catalyst 4a and the DPF 4b. The temperature of the NSR catalyst 4a can be detected by the exhaust gas temperature sensor S2. An exhaust gas temperature sensor S3 is mounted on the exhaust passage 2 at a position downstream of the DPF 4b and upstream of the reductant supply valve 5. The temperature of the DPF 4b can be detected by the exhaust gas temperature sensor S3. A NOx sensor N2 is mounted on the exhaust passage 2 at a position downstream of the reductant supply valve 5 and upstream of the SCR catalyst 6. The concentration of NOx in the exhaust gas flowing into the SCR catalyst 6 can be detected by the NOx sensor N2. An exhaust gas temperature sensor S4 and a NOx sensor N3 are mounted on the exhaust passage 2 at positions downstream of the SCR catalyst 6. The temperature of the SCR catalyst 6 can be detected by the exhaust gas temperature sensor S4. The concentration of NOx in the exhaust gas flowing out of the SCR catalyst 6 can be detected by the NOx sensor N3.

The NOx sensor N2 is an example of a first NOx sensor mounted on the exhaust passage 2 at a position between the NSR catalyst 4a and the SCR catalyst 6, and configured to detect a concentration of NOx in the exhaust gas flowing into the SCR catalyst 6. The NOx sensor N3 is an example of a second NOx sensor mounted on the exhaust passage 2 at a position downstream of the SCR catalyst 6, and configured to detect a concentration of NOx in the exhaust gas flowing out of the SCR catalyst 6.

A fuel injection valve 7 configured to supply fuel into the internal combustion engine 1 is attached to the internal combustion engine 1. An intake passage 8 is connected to the internal combustion engine 1. A throttle valve 9 configured to adjust an amount of air to be taken into the internal combustion engine 1 is disposed on the intake passage 8. An airflow meter 15 configured to detect an amount of air to be taken into the internal combustion engine 1 is mounted on the intake passage 8 at a position upstream of the throttle valve 9.

The ECU 10 is an electronic control unit configured to control the internal combustion engine 1. The ECU 10 includes, for example, a central processing unit (CPU), a random-access memory (RAM), a read-only memory (ROM), and a storage device. The ECU 10 controls the internal combustion engine 1 based on operating conditions of the internal combustion engine 1 or in response to a driver's request. In addition to the sensors described above, an accelerator operation amount sensor 17 and a crank position sensor 18 are connected to the ECU 10 via electrical wires. The accelerator operation amount sensor 17 is configured to output an electrical signal corresponding to an amount by which an accelerator pedal 16 is depressed by a driver, and configured to detect an engine load. The crank position sensor 18 is configured to detect an engine speed. Signals output from these sensors are input into the ECU 10. Further, the reductant supply valve 5, the fuel injection valve 7, and the throttle valve 9 are connected to the ECU 10 via electrical wires. These devices are controlled by the ECU 10.

The ECU 10 executes evaluation control of evaluating the NOx reducing performance of the SCR catalyst 6. The evaluation control is executed by an evaluation unit, a storage amount determining unit, a state determining unit, a temperature-increase executing unit, a temperature-increase determining unit, a sensor-state determining unit, a recovery determining unit, and a temperature-increase stopping unit that are functionally implemented by the CPU, the ROM, and the RAM.

The NOx reducing performance of the SCR catalyst 6 is evaluated based on the values detected by the NOx sensor N2 and the NOx sensor N3 that are respectively disposed upstream and downstream of the SCR catalyst 6. Specifically, a NOx reduction rate is calculated as an index indicating the NOx reducing performance of the SCR catalyst 6, by the following equation, and the NOx reducing performance of the SCR catalyst 6 is evaluated based on the calculated NOx reduction rate.

NOx reduction rate = {(concentration of NOx in exhaust gas flowing into SCR catalyst 6 - concentration of NOx in exhaust gas flowing out of SCR catalyst 6) / concentration of NOx in exhaust gas flowing into SCR catalyst 6} $\times$ 100(%)

The concentration of NOx in the exhaust gas flowing into the SCR catalyst 6 and the concentration of NOx in the exhaust gas flowing out of the SCR catalyst 6 are respectively calculated based on the value detected by the NOx sensor N2 and the value detected by the NOx sensor N3.

Specifically, the NOx reduction rate, that is, the NOx reducing performance of the SCR catalyst 6 is evaluated to be higher as the concentration of NOx in the exhaust gas flowing out of the SCR catalyst 6 is lower, by a larger amount, than the concentration of NOx in the exhaust gas flowing into the SCR catalyst 6, in other words, as the difference between the concentration of NOx in the exhaust gas flowing into the SCR catalyst 6 and the concentration of NOx in the exhaust gas flowing out of the SCR catalyst 6 is larger. The NOx reduction rate, that is, the NOx reducing performance of the SCR catalyst 6 is evaluated to be lower as the difference between the concentration of NOx in the exhaust gas flowing into the SCR catalyst 6 and the concentration of NOx in the exhaust gas flowing out of the SCR catalyst 6 is smaller.

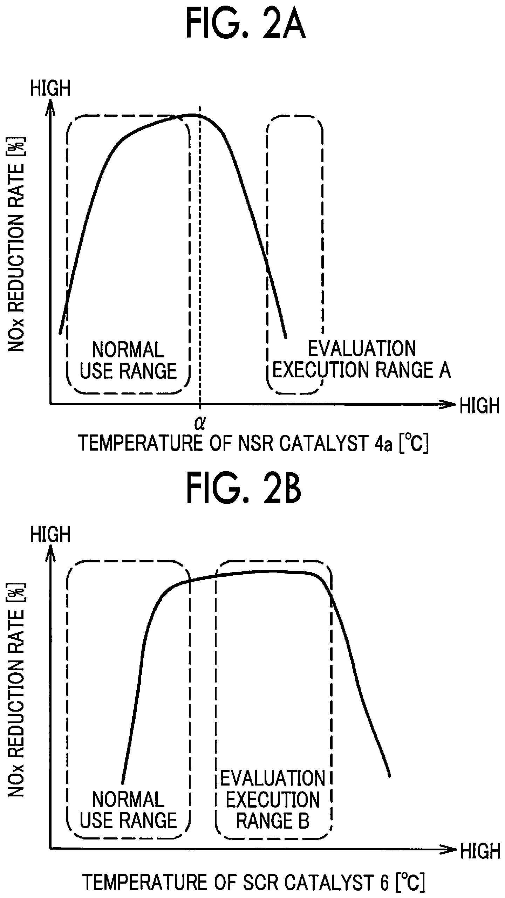

FIG. 2A is a graph illustrating the NOx reduction rate with respect to the temperature of the NSR catalyst 4a. FIG. 2B is a graph illustrating the NOx reduction rate with respect to the temperature of the SCR catalyst 6. FIG. 2A and FIG. 2B respectively illustrate the NOx reduction rate achieved by the NSR catalyst 4a (hereinafter, referred to as "NOx reduction rate of the NSR catalyst 4a") and the NOx reduction rate achieved by the SCR catalyst 6 (hereinafter, referred to as "NOx reduction rate of the SCR catalyst 6") in a normal state. The ordinate axis and the abscissa axis in FIG. 2A have the same scales as those in FIG. 2B. The NOx reduction rate of the NSR catalyst 4a is calculated by a method similar to that described above. A normal use range is illustrated in each of FIG. 2A and FIG. 2B. In a normal operation state where, for example, a process of recovering the exhaust gas cleaning ability of the NSR catalyst 4a, the DPF 4b, and the SCR catalyst 6 is not executed, the temperature of each of the NSR catalyst 4a and the SCR catalyst 6 highly frequently falls within the normal use range. The normal use range is, for example, a temperature range from about 100°C to about 250°C. In the normal use range, the NOx reduction rate of the NSR catalyst 4a is relatively high, but the NOx reduction rate of the SCR catalyst 6 is relatively low.

When the NOx reduction rate of the SCR catalyst 6 is calculated while the temperature of the NSR catalyst 4a and the temperature of the SCR catalyst 6 are within the normal use range, the following problem may occur. Because the NOx reduction rate of the NSR catalyst 4a is high, the exhaust gas with a low NOx concentration flows into the SCR catalyst 6 disposed downstream of the NSR catalyst 4a. Thus, regardless of the NOx reduction rate of the SCR catalyst 6, both the concentration of NOx in the exhaust gas flowing into the SCR catalyst 6 and the concentration of NOx in the exhaust gas flowing out of the SCR catalyst 6 may be low. As a result, the NOx reducing performance of the SCR catalyst 6 may not be accurately evaluated. Further, the value detected by the NOx sensor N2 and the value detected by the NOx sensor N3 may vary within tolerance. Therefore, it may not be possible to accurately determine whether the difference between the concentration of NOx in the exhaust gas flowing into the SCR catalyst 6 and the concentration of NOx in the exhaust gas flowing out of the SCR catalyst 6 is attributable to the actual NOx reducing rate of the SCR catalyst 6 or is attributable to the variations in the value detected by the NOx sensor N2 and the value detected by the NOx sensor N3. For this reason, it may not be possible to accurately evaluate the NOx reducing performance of the SCR catalyst 6.

In view of this, in the present embodiment, the NOx reduction rate of the SCR catalyst 6 is calculated when the temperature of the NSR catalyst 4a and the temperature of the SCR catalyst 6 are respectively within an evaluation execution range A and an evaluation execution range B that are temperature ranges higher than the normal use range. The evaluation execution range A and the evaluation execution range B are respectively illustrated in FIG. 2A and FIG. 2B. The evaluation execution range A is a temperature range that is set such that NOx in an amount sufficient to accurately calculate the NOx reduction rate of the SCR catalyst 6 is desorbed from the NSR catalyst 4a. Further, the evaluation execution range A is a temperature range having a lower limit that is higher than a desorption start temperature $\alpha$ at which desorption of NOx that has been stored in the NSR catalyst 4a starts. Furthermore, the evaluation execution range A is a temperature range in which the NOx reduction rate of the NSR catalyst 4a is relatively low. The desorption start temperature $\alpha$ is a temperature that is slightly higher than a temperature corresponding to a peak value of the NOx reduction rate of the NSR catalyst 4a. The desorption start temperature $\alpha$ is a temperature at which the NOx reduction rate is lower than the peak value thereof. When the temperature of the NSR catalyst 4a falls within the evaluation execution range A while the NOx storage amount is large, the NOx reduction rate decreases and the desorption amount of NOx that has been stored in the NSR catalyst 4a increases.

The lower limit of the evaluation execution range A is set to a temperature that is higher by a predetermined temperature than the desorption start temperature $\alpha$, for the following reason. The NOx reduction rate decreases even at a temperature that is slightly higher than the desorption start temperature $\alpha$. However, the NOx reduction rate at this temperature is still high, and therefore NOx in an amount sufficient to accurately calculate the NOx reduction rate of the SCR catalyst 6 cannot be desorbed from the NSR catalyst 4a. In view of this, the lower limit of the evaluation execution range A is set to the temperature that is higher by the predetermined temperature than the desorption start temperature $\alpha$. As a result, the evaluation execution range A is set to a temperature range in which the NOx reduction rate is sufficiently low, so that NOx in an amount sufficient to accurately calculate the NOx reduction rate of the SCR catalyst 6 can be desorbed from the NSR catalyst 4a. Thus, when the temperature of the NSR catalyst 4a falls within the evaluation execution range A while the NOx storage amount is relatively large, the concentration of NOx in the exhaust gas flowing out of the NSR catalyst 4a increases and the exhaust gas with a high NOx concentration flows into the SCR catalyst 6. The evaluation execution range A is, for example, a temperature range from about 400°C to about 450°C.

The evaluation execution range B is an activation temperature range in which the NOx reduction rate of the SCR catalyst 6 is relatively high. Thus, when the NOx reducing performance of the SCR catalyst 6 is normal and an amount of reductant adsorbed on the SCR catalyst 6 is equal to or larger than an adsorption amount predetermined value while the temperature of the SCR catalyst 6 is within the evaluation execution range B, the SCR catalyst 6 can exhibit high NOx reducing performance. Therefore, the concentration of NOx in the exhaust gas flowing out of the SCR catalyst 6 is sufficiently lower than the concentration of NOx in the exhaust gas flowing into the SCR catalyst 6. As described above, when the temperature of the NSR catalyst 4a and the temperature of the SCR catalyst 6 respectively fall within the evaluation execution range A and the evaluation execution range B while the amount of NOx stored in the NSR catalyst 4a is relatively large, the difference between the concentration of NOx in the exhaust gas flowing into the SCR catalyst 6 and the concentration of NOx in the exhaust gas flowing out of the SCR catalyst 6 is relatively large. It is therefore possible to accurately evaluate the NOx reducing performance of the SCR catalyst 6, in this state. The evaluation execution range B is, for example, a temperature range from about 250°C to about 450°C.

As illustrated in FIG. 2B, the evaluation execution range B is a relatively wide temperature range, and therefore the temperature of the SCR catalyst 6 may fall within the evaluation execution range B, for example, when the load on the internal combustion engine 1 is a medium load or a high load. However, as illustrated in FIG. 2A, the evaluation execution range A is a relatively narrow temperature range, and therefore the load on the internal combustion engine 1 needs to be a high load in order to place the temperature of the NSR catalyst 4a within the evaluation execution range A. Thus, the frequency at which the temperature of the NSR catalyst 4a and the temperature of the SCR catalyst 6 respectively fall within the evaluation execution range A and the evaluation execution range B is low. Therefore, the frequency at which the evaluation condition for accurately evaluating the NOx reducing performance of the SCR catalyst 6 is satisfied is also low. In view of this, in the present embodiment, a temperature-increasing process of increasing the temperature of the NSR catalyst 4a such that the temperature of the NSR catalyst 4a falls within the evaluation execution range A is executed when the NOx reducing performance of the SCR catalyst 6 is evaluated. The evaluation control will be described below in detail.

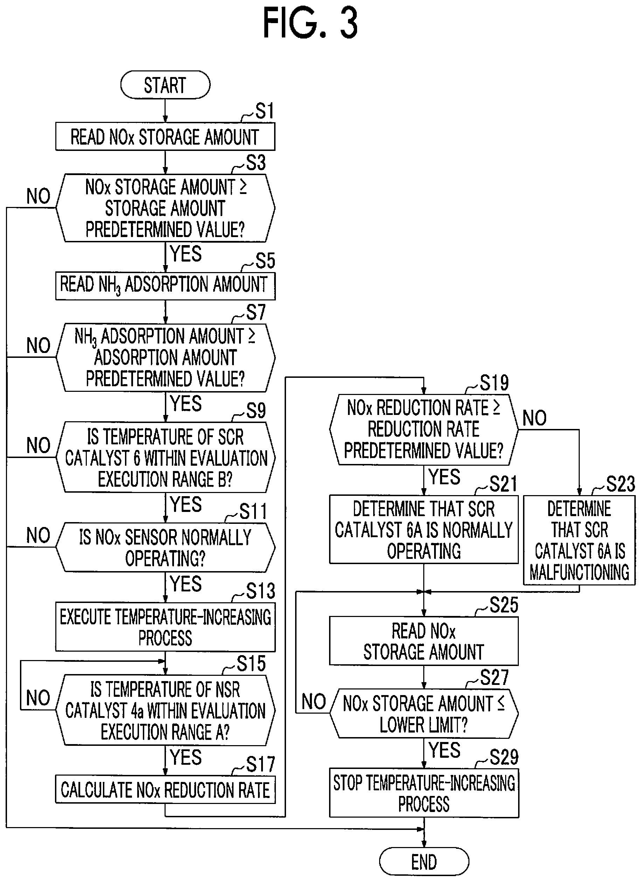

FIG. 3 is a flowchart illustrating an example of the evaluation control executed by the ECU 10. The evaluation control is repeatedly executed at predetermined time intervals. First, the ECU 10 reads an amount of NOx stored in the NSR catalyst 4a (hereinafter, referred to as "NOx storage amount" where appropriate) (Step S1). The ECU 10 calculates the amount of NOx stored in the NSR catalyst 4a as needed, independently of this flowchart. The amount of NOx stored in the NSR catalyst 4a is calculated, for example, by adding up the difference between the amount of NOx in the exhaust gas flowing into the NSR catalyst 4a and the amount of NOx in the exhaust gas flowing out of the NSR catalyst 4a after execution of an immediately preceding rich spike. Specifically, the amount of NOx in the exhaust gas flowing into the NSR catalyst 4a and the amount of NOx in the exhaust gas flowing out of the NSR catalyst 4a can be acquired based on the values detected by the NOx sensors N1, N2 and the airflow meter 15. A rich spike is a process of recovering the NOx storage performance of the NSR catalyst 4a. In the rick spike, the air-fuel ratio of the exhaust gas is temporarily brought to a rich air-fuel ratio to supply, for example, HC and CO, serving as a reductant, to the NSR catalyst 4a, so that the NSR catalyst 4a desorbs NOx that has been stored therein, and then the reductant is caused to react with NOx to reduce NOx to $N_2$ and $NH_3$. The method of calculating the amount of NOx stored in the NSR catalyst 4a is not limited to this method.

Then, the ECU 10 determines whether the amount of NOx stored in the NSR catalyst 4a is equal to or larger than a storage amount predetermined value (Step S3). The storage amount predetermined value is an amount of NOx stored in the NSR catalyst 4a, at which the amount of NOx desorbed from the NSR catalyst 4a due to execution of a temperature-increasing process (described later) is suitable for evaluation of the NOx reducing performance of the SCR catalyst 6. In other words, if the amount of NOx stored in the NSR catalyst 4a is the storage amount predetermined value, the amount of NOx desorbed from the NSR catalyst 4a due to execution of the temperature-increasing process is suitable for evaluation of the NOx reducing performance of the SCR catalyst 6. The storage amount predetermined value is a value defined in advance by experiment. When the ECU 10 makes a negative determination in Step S3, the evaluation control ends. The process in Step S3 is an example of a process that is executed by the storage amount determining unit configured to determine whether the amount of NOx stored in the NSR catalyst 4a is equal to or larger than the storage amount predetermined value.

When the ECU 10 makes an affirmative determination in Step S3, the ECU 10 then reads an amount of $NH_3$ adsorbed on the SCR catalyst 6 (Step S5). The ECU 10 calculates the amount of $NH_3$ adsorbed on the SCR catalyst 6 as needed, independently of this flowchart. The amount of $NH_3$ adsorbed on the SCR catalyst 6 is calculated based on, for example, an amount of $NH_3$ produced in the NSR catalyst 4a, an amount of $NH_3$ supplied from the reductant supply valve 5 to the SCR catalyst 6, an amount of $NH_3$ consumed by the SCR catalyst 6, and an amount of $NH_3$ desorbed from the SCR catalyst 6.

The amount of $NH_3$ produced in the NSR catalyst 4a per unit time is calculated according to, for example, a map or a calculation expression that defines the relationship among the intake air amount, the air-fuel ratio, and the NOx storage amount. The amount of $NH_3$ consumed by the SCR catalyst 6 per unit time is calculated according to, for example, a map or a calculation expression that defines the relationship among the temperature of the SCR catalyst 6, the intake air amount, and the concentration of NOx in the exhaust gas flowing into the SCR catalyst 6. The amount of $NH_3$ desorbed from the SCR catalyst 6 per unit time is calculated according to, for example, a map or a calculation expression that defines the relationship between the temperature of the SCR catalyst 6 and the amount of $NH_3$ adsorbed on the SCR catalyst 6.

Then, the ECU 10 determines whether the amount of $NH_3$ adsorbed on the SCR catalyst 6 is equal to or larger than an adsorption amount predetermined value (Step S7). The adsorption amount predetermined value is an adsorption amount of $NH_3$, which is required to reduce NOx using the SCR catalyst 6 when the NOx reducing performance of the SCR catalyst 6 is normal. The adsorption amount predetermined value is a value defined in advance by experiment. When the ECU 10 makes a negative determination in Step S7, the evaluation control ends.

When the ECU 10 makes an affirmative determination in Step S7, the ECU 10 then determines whether the temperature of the SCR catalyst 6 is within the evaluation execution range B (Step S9). The temperature of the SCR catalyst 6 is detected by the exhaust air temperature sensor S4 as described above. When the ECU 10 makes a negative determination in Step S9, the evaluation control ends. The processes in Step S7 and Step S9 are an example of a process that is executed by the state determining unit configured to determine whether the temperature of the SCR catalyst 6 is within the activation temperature range and the amount of reductant adsorbed on the SCR catalyst 6 is equal to or larger than the adsorption amount predetermined value.

When the ECU 10 makes an affirmative determination in Step S9, the ECU 10 then determines whether the NOx sensors N2, N3, which are used for evaluation, are normally operating (Step S11). This is because the NOx reducing performance of the SCR catalyst 6 can be accurately evaluated on the premise that the NOx sensors N2, N3 are normally operating. The determination is made based on whether a sensor malfunction flag indicating that at least one of the NOx sensors N2, N3 is malfunctioning is OFF. When the ECU 10 makes a negative determination in Step S11, the evaluation control ends. The process in Step S11 is an example of a process that is executed by the sensor-state determining unit configured to determine whether the NOx sensors N2, N3 are normally operating.

A determination as to whether the NOx sensor N2 is normally operating is made, for example, as follows. The concentration of NOx in the exhaust gas flowing into the SCR catalyst 6 is estimated. Then, the determination is made based on a rate of change in the estimated value when the estimated value changes, a rate of change in the value detected by the NOx sensor N2, and a duration of time during which a state where the difference between the estimated value and the value detected by the NOx sensor N2 is equal to or larger than a predetermined difference continues. When the difference between the rate of change in the estimated value and the rate of change in the value detected by the NOx sensor N2 is large or when the duration of time described above is long, the ECU 10 determines that the NOx sensor N2 is malfunctioning. Similarly, a determination as to whether the NOx sensor N3 is normally operating is made based on an estimated value of the concentration of NOx in the exhaust gas flowing out of the SCR catalyst 6 and the value detected by the NOx sensor N3. The concentration of NOx in the exhaust gas flowing into the SCR catalyst 6 and the concentration of NOx in the exhaust gas flowing out of the SCR catalyst 6 are estimated based on, for example, an operating state of the internal combustion engine 1. The method of determining whether the NOx sensors N2, N3 are normally operating is not limited to this method, and another known method may be employed. For example, the following method may be employed. The concentration of NOx in the exhaust gas that reaches the NOx sensor N2 is forcibly changed, and the ECU 10 determines that the NOx sensor N2 is malfunctioning when the change in the value detected by the NOx sensor N2 deviates from the change in the value detected by the NOx sensor N2 while the NOx sensor N2 is normally operating. The same holds for the NOx sensor N3.

When the ECU 10 makes an affirmative determination in Step S11, the ECU 10 then executes a temperature-increasing process of increasing the temperature of the NSR catalyst 4a (Step S13). Specifically, the temperature of the exhaust gas flowing into the NSR catalyst 4a is increased. By increasing the temperature of the NSR catalyst 4a up to a temperature within the evaluation execution range A, NOx that has been stored in the NSR catalyst 4a is desorbed into the exhaust gas and thus the exhaust gas with a high NOx concentration flows into the SCR catalyst 6. When the temperature-increasing process is executed, a temperature-increasing process execution flag is switched form OFF to ON. The process in Step S13 is an example of a process that is executed by the temperature-increase executing unit configured to increase the temperature of the NSR catalyst 4a up to a temperature that is equal to or higher than a desorption temperature at which desorption of NOx that has been stored in the NSR catalyst 4a starts, when the ECU 10 makes an affirmative determination in each of all Steps S3, S7, S9, and S11.

The temperature of the exhaust gas is increased in the temperature-increasing process by performing sub-fuel injection at a timing later than a timing at which main fuel injection is performed by the fuel injection valve 7. However, the method of increasing the temperature of the exhaust gas is not limited to this. For example, the temperature of the exhaust gas may be increased by retarding the fuel injection timing. Alternatively, the temperature of the exhaust gas may be increased by controlling the intake air amount and the fuel injection amount such that the air-fuel ratio of the exhaust gas is periodically switched between a rich air-fuel ratio and a lean air-fuel ratio.

The method of performing the temperature-increasing process is not limited to the foregoing method. When a fuel supply valve configured to supply fuel, which is used as a reductant, to the NSR catalyst 4a is disposed upstream of the NSR catalyst 4a, the fuel may be supplied to the NSR catalyst 4a from the fuel supply valve and the fuel on the NSR catalyst 4a may be burned in a lean atmosphere to increase the temperature of the NSR catalyst 4a. Alternatively, a heater configured to heat the NSR catalyst 4a may be provided, and the temperature of the NSR catalyst 4a may be increased by supplying electric power to the heater.

Then, the ECU 10 determines whether the temperature of the NSR catalyst 4a falls within the evaluation execution range A illustrated in FIG. 2A (Step S15). Specifically, the determination is made based on the value detected by the exhaust gas temperature sensor S2. When the ECU 10 makes a negative determination in Step S15, the ECU 10 then executes the process in Step S15 again. The process in Step S15 is an example of a process that is executed by the temperature-increase determining unit configured to determine whether the temperature of the NSR catalyst 4a is equal to or higher than the desorption temperature.

When the ECU 10 makes an affirmative determination in Step S15, the amount of NOx desorbed from the NSR catalyst 4a increases and the concentration of NOx in the exhaust gas flowing into the SCR catalyst 6 increases, and the ECU 10 calculates a NOx reduction rate of the SCR catalyst 6 based on the values detected by the NOx sensors N2, N3 (Step S17). That is, while the temperature of the NSR catalyst 4a and the temperature of the SCR catalyst 6 are respectively within the evaluation execution range A and the evaluation execution range B, the NOx reduction rate of the SCR catalyst 6 is calculated. The method of calculating the NOx reduction rate is the same as that described above. The process in Step S17 is an example of a process that is executed by the evaluation unit configured to evaluate the NOx reduction rate of the SCR catalyst 6 based on the values detected by the NOx sensors N2, N3, when the ECU 10 makes an affirmative determination in Step S15.

Then, the ECU 10 determines whether the NOx reduction rate of the SCR catalyst 6 is equal to or higher than a reduction rate predetermined value (Step S19). When the ECU 10 makes an affirmative determination, the ECU 10 determines that the SCR catalyst 6 is normally operating (Step S21). When the ECU 10 makes a negative determination, the ECU 10 determines that the SCR catalyst 6 is malfunctioning (Step S23). When the ECU 10 determines that the SCR catalyst 6 is malfunctioning, the ECU 10 may prompt a driver of the vehicle to replace or repair the SCR catalyst 6 by turning on, for example, a warning lamp installed in a vehicle compartment. As described above, when the ECU 10 makes an affirmative determination in each of all Steps S3, S7, S9, S11, and S15, the ECU 10 calculates the NOx reduction rate of the SCR catalyst 6 and evaluates the NOx reducing performance. The processes in Steps S3, S7, S9, S11, and S15 are an example of a process of determining whether an evaluation condition is satisfied. The evaluation condition is a condition that NOx is supplied to the SCR catalyst 6 of which the temperature is within the activation temperature range and on which the reductant in an amount equal to or larger than the adsorption amount predetermined value has been adsorbed. The NOx supplied to the SCR catalyst 6 is NOx that has been desorbed from the NSR catalyst 4a due to an increase in the temperature of the NSR catalyst 4a, in which NOx is stored, up to a temperature equal to or higher than a desorption temperature at which desorption of NOx from the NSR catalyst 4a starts. The processes in Steps S19, S21, and S23 are an example of a process that is executed by the evaluation unit configured to evaluate the NOx reducing performance of the SCR catalyst 6 based on the values detected by the NOx sensors N2, N3, when the evaluation condition is satisfied.

When the ECU 10 executes one of Steps S21 and S23, the ECU 10 then reads an amount of NOx stored in the NSR catalyst 4a again (Step S25). The amount of NOx stored in the NSR catalyst 4a at this time reflects the amount of NOx stored in the NSR catalyst 4a before the temperature-increasing process is executed and the concentration of NOx in the exhaust gas flowing into the NSR catalyst 4a and the concentration of NOx in the exhaust gas flowing out of the NSR catalyst 4a while the temperature-increasing process is executed.

Then, the ECU 10 determines whether the amount of NOx stored in the NSR catalyst 4a is equal to or smaller than a lower limit (Step S27). The lower limit is a value at which the NOx storage performance of the NSR catalyst 4a has been satisfactorily recovered. The lower limit may be about zero. When the ECU 10 makes a negative determination in Step S27, the ECU 10 then executes the process in Step S25 again. When the ECU 10 makes an affirmative determination in Step S27, the ECU 10 stops the temperature-increasing process (Step S29). In this way, the temperature-increasing process continues to be executed until the NOx storage performance of the NSR catalyst 4a is recovered. Thus, it is possible to accurately evaluate the NOx reducing performance of the SCR catalyst 6 and to recover the NOx storage performance of the NSR catalyst 4a. The process in Step S27 is an example of a process that is executed by the recovery determining unit configured to determine whether the NOx storage performance of the NSR catalyst 4a has been recovered by increasing the temperature of the NSR catalyst 4a. The process in Step S29 is an example of a process that is executed by the temperature-increase stopping unit configured to stop an increase in the temperature of the NSR catalyst 4a when the ECU 10 makes an affirmative determination in Step S27. When the temperature-increasing process is stopped, the temperature-increasing process execution flag is switched from ON to OFF.

Preferably, the temperature-increasing process continues to be executed until the NOx storage performance of the NSR catalyst 4a is satisfactorily recovered, as described above. However, the timing at which the temperature-increasing process is stopped is not limited to this. For example, the temperature-increasing process may be stopped immediately after the temperature-increasing process is executed for a minimum duration of time that is required to calculate the NOx reduction rate of the SCR catalyst 6. In this way, it is possible to curb a decrease in the fuel efficiency and a decrease in the drivability due to prolongation of the temperature-increasing process.

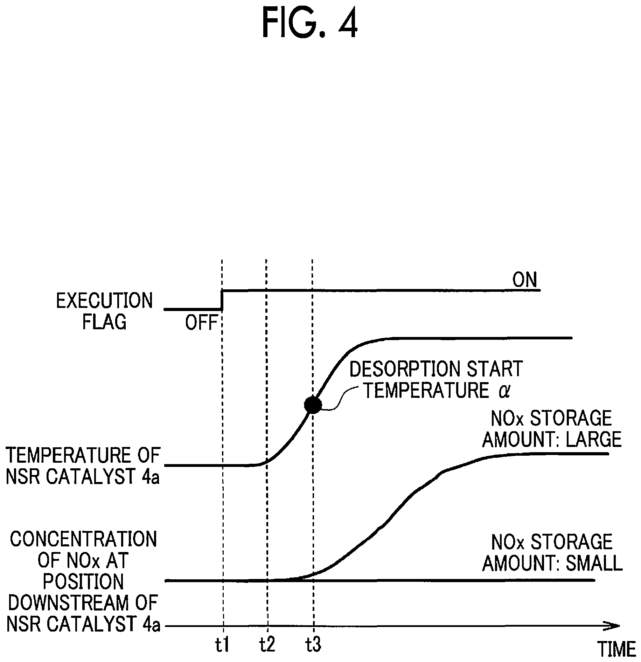

Next, description will be provided on a change in the concentration of NOx in the exhaust gas at a position downstream of an outlet of the NSR catalyst 4a due to execution of the temperature-increasing process. FIG. 4 is a time-series chart illustrating a change in the temperature of the NSR catalyst 4a due to execution of the temperature-increasing process, and also illustrating a change in the concentration of NOx in the exhaust gas at a position downstream of the outlet of the NSR catalyst 4a. FIG. 4 also illustrates the state of the temperature-increasing process execution flag. After the temperature-increasing process execution flag is switched from OFF to ON at time t1, the temperature of the NSR catalyst 4a starts to increase at time t2. After the temperature of the NSR catalyst 4a reaches the desorption start temperature $\alpha$ at time t3, the NOx desorption amount increases gradually and thus the concentration of NOx in the exhaust gas flowing into the SCR catalyst 6 increases gradually, when the amount of NOx stored in the NSR catalyst 4a is large. As a result, the environment surrounding the SCR catalyst 6 becomes suitable for evaluating the NOx reducing performance. When the amount of NOx stored in the NSR catalyst 4a is small, the temperature-increasing process is not actually executed. Even if the temperature-increasing process is executed, the NOx desorption amount remains small and the concentration of NOx in the exhaust gas flowing into the SCR catalyst 6 also remains low. Therefore, the environment surrounding the SCR catalyst 6 remains unsuitable for evaluating the NOx reducing performance.

While the example embodiment of the invention has been described in detail, the invention is not limited to the foregoing embodiment and various modifications and changes may be made to the foregoing embodiment within the technical scope of the invention defined in the appended claims.

In the foregoing embodiment, the evaluation execution range A is set to a temperature range having a lower limit that is higher by the predetermined temperature than the desorption start temperature $\alpha$. However, the evaluation

execution range A may be any temperature range having a lower limit that is equal to or higher than the desorption start temperature $\alpha$. From the viewpoint of increasing the concentration of NOx in the exhaust gas flowing into the SCR catalyst 6 by desorbing a sufficient amount of NOx from the NSR catalyst 4a, the evaluation execution range A is preferably set to a higher temperature range. On the other hand, from the viewpoint of reducing the deterioration of fuel efficiency due to execution of the temperature-increasing process of increasing the temperature of the NSR catalyst 4a, the evaluation execution range A is preferably prevented from being set to an excessively high temperature range. In view of this, the evaluation execution range A is preferably set in consideration of a balance between an increase in the concentration of NOx in the exhaust gas flowing into the SCR catalyst 6 and reduction in the deterioration of the fuel efficiency due to execution of the temperature-increasing process.

In the foregoing embodiment, the NOx reduction rate is calculated as an index indicating the NOx reducing performance of the SCR catalyst 6. However, the index indicating the NOx reducing performance of the SCR catalyst 6 is not limited to the NOx reduction rate. Instead of the NOx reduction rate, for example, a NOx reduction amount may be calculated as an index indicating the NOx reducing performance of the SCR catalyst 6, and the NOx reducing performance of the SCR catalyst 6 may be evaluated based on the calculated NOx reduction amount. Specifically, the NOx reduction amount can be calculated according to the following equation.

$$\text{NOx reduction amount} = \text{amount of NOx in exhaust gas flowing into SCR catalyst}$$
$$6 - \text{amount of NOx in exhaust gas flowing out of SCR catalyst } 6$$

The amount of NOx in the exhaust gas flowing into the SCR catalyst 6 and the amount of NOx in the exhaust gas flowing out of the SCR catalyst 6 can be calculated respectively based on the value detected by the NOx sensor N2 and the value detected by the NOx sensor N3, and based on the flow rate of the exhaust gas. The flow rate of exhaust gas can be calculated based on the value detected by the airflow meter 15 configured to detect an intake air amount.

In the foregoing embodiment, whether the NOx sensors N2, N3 are normally operating is determined. Alternatively, whether the NOx sensor N1, in addition to the NOx sensors N2, N3, is normally operating may be determined. This is because, when the NOx sensor N1 is not normally operating, the amount of NOx stored in the NSR catalyst 4a cannot be accurately calculated. The method of determining whether the NOx sensor N1 is normally operating may be the same as the method of determining whether the NOx sensors N2, N3 are normally operating, or another known method may be employed. When the reliability of these NOx sensors is high, it is not necessary to determine whether the NOx sensors are normally operating.

**Claims**

1. An exhaust gas control system for an internal combustion engine (1), the exhaust gas control system comprising:

   a first catalyst (4a) disposed on an exhaust passage for the internal combustion engine (1), the first catalyst (4a) being a NOx storage reduction catalyst;
   a second catalyst (6) disposed on the exhaust passage at a position downstream of the first catalyst (4a), the second catalyst (6) being a NOx selective catalytic reduction catalyst;
   a first NOx sensor (N2) mounted on the exhaust passage at a position between the first catalyst (4a) and the second catalyst (6), the first NOx sensor (N2) being configured to detect a concentration of NOx in exhaust gas flowing into the second catalyst (6);
   a second NOx sensor (N3) mounted on the exhaust passage at a position downstream of the second catalyst (6), the second NOx sensor (N3) being configured to detect a concentration of NOx in the exhaust gas flowing out of the second catalyst (6); and
   an electronic control unit (10) configured to, when an evaluation condition is satisfied, evaluate NOx reducing performance of the second catalyst (6) based on a value detected by the first NOx sensor (N2) and a value detected by the second NOx sensor (N3),
   the evaluation condition being a condition that NOx is supplied to the second catalyst (6) of which a temperature is within an activation temperature range and on which a reductant in an amount equal to or larger than an adsorption amount predetermined value has been adsorbed, and
   the NOx supplied to the second catalyst being NOx that has been desorbed from the first catalyst (4a) due to an increase in a temperature of the first catalyst, the first catalyst storing NOx, up to a temperature equal to or higher than a desorption temperature at which desorption of NOx from the first catalyst starts.

2. The exhaust gas control system according to claim 1, wherein:

the electronic control unit (10) is configured to execute first determination control of determining whether an amount of NOx stored in the first catalyst (4a) is equal to or larger than a storage amount predetermined value;

the electronic control unit (10) is configured to execute second determination control of determining whether the temperature of the second catalyst (6) is within the activation temperature range and determining whether the amount of reductant adsorbed on the second catalyst (6) is equal to or larger than the adsorption amount predetermined value;

the electronic control unit (10) is configured to increase the temperature of the first catalyst (4a) such that the temperature of the first catalyst (4a) is equal to or higher than the desorption temperature, when an affirmative determination is made in each of both the first determination control and the second determination control;

the electronic control unit (10) is configured to execute third determination control of determining whether the temperature of the first catalyst is equal to or higher than the desorption temperature; and

the electronic control unit (10) is configured to determine that the evaluation condition is satisfied and evaluate the NOx reducing performance of the second catalyst (6) based on the value detected by the first NOx sensor (N2) and the value detected by the second NOx sensor (N3), when an affirmative determination is made in the third determination control.

3. The exhaust gas control system according to claim 2, wherein:

the electronic control unit (10) is configured to execute fourth determination control of determining whether the first NOx sensor (N2) and the second NOx sensor (N3) are normally operating; and

the electronic control unit (10) is configured to increase the temperature of the first catalyst (4a), when an affirmative determination is made in each of all the first determination control, the second determination control, and the fourth determination control.

4. The exhaust gas control system according to any one of claims 1 to 3, wherein:

the electronic control unit (10) is configured to execute fifth determination control of determining whether NOx storage performance of the first catalyst (4a) has been recovered by increasing the temperature of the first catalyst (4a); and

the electronic control unit (10) is configured to stop increasing the temperature of the first catalyst, when an affirmative determination is made in the fifth determination control.

5. A method of controlling an exhaust gas control system for an internal combustion engine (1), the exhaust gas control system including: a first catalyst (4a) disposed on an exhaust passage for the internal combustion engine (1), the first catalyst (4a) being a NOx storage reduction catalyst; a second catalyst (6) disposed on the exhaust passage at a position downstream of the first catalyst (4a), the second catalyst (6) being a NOx selective catalytic reduction catalyst; a first NOx sensor (N2) mounted on the exhaust passage at a position between the first catalyst (4a) and the second catalyst (6); a second NOx sensor (N3) mounted on the exhaust passage at a position downstream of the second catalyst (6); and an electronic control unit (10),

the first NOx sensor (N2) being configured to detect a concentration of NOx in exhaust gas flowing into the second catalyst (6), and

the second NOx sensor (N3) being configured to detect a concentration of NOx in the exhaust gas flowing out of the second catalyst (6),

the method comprising evaluating, by the electronic control unit (10), NOx reducing performance of the second catalyst (6) based on a value detected by the first NOx sensor (N2) and a value detected by the second NOx sensor (N3), when an evaluation condition is satisfied,

the evaluation condition being a condition that NOx is supplied to the second catalyst (6) of which a temperature is within an activation temperature range and on which a reductant in an amount equal to or larger than an adsorption amount predetermined value has been adsorbed, and

the NOx supplied to the second catalyst being NOx that has been desorbed from the first catalyst (4a) due to an increase in a temperature of the first catalyst, the first catalyst storing NOx, up to a temperature equal to or higher than a desorption temperature at which desorption of NOx from the first catalyst starts.

**Patentansprüche**

1. Abgassteuerungssystem für einen Verbrennungsmotor (1), wobei das Abgassteuerungssystem umfasst:

einen ersten Katalysator (4a), der an einem Abgaskanal für den Verbrennungsmotor (1) angeordnet ist, wobei der erste Katalysator (4a) ein NOx-Speicherreduktionskatalysator ist,

einen zweiten Katalysator (6), der an dem Abgaskanal an einer Position stromabwärts des ersten Katalysators (4a) angeordnet ist, wobei der zweite Katalysator (6) ein NOx-selektiver katalytischer Reduktionskatalysator ist,

einen ersten NOx-Sensor (N2), der an dem Abgaskanal an einer Position zwischen dem ersten Katalysator (4a) und dem zweiten Katalysator (6) montiert ist, wobei der erste NOx-Sensor (N2) dazu ausgestaltet ist, eine NOx-Konzentration in Abgas, das in den zweiten Katalysator (6) strömt, zu erfassen,

einen zweiten NOx-Sensor (N3), der an dem Abgaskanal an einer Position stromabwärts des zweiten Katalysators (6) montiert ist, wobei der zweite NOx-Sensor (N3) dazu ausgestaltet ist, eine NOx-Konzentration in Abgas, das aus dem zweiten Katalysator (6) heraus strömt, zu erfassen, und

eine elektronische Steuerungseinheit (10), die dazu ausgestaltet ist, bei Erfüllen einer Voraussetzung für eine Bewertung die NOx-Reduktionsleistung des zweiten Katalysators (6) auf der Basis eines von dem ersten NOx-Sensor (N2) erfassten Werts und eines von dem zweiten NOx-Sensor (N3) erfassten Werts zu bewerten,

wobei die Voraussetzung für eine Bewertung eine Voraussetzung ist, bei der NOx dem zweiten Katalysator (6) zugeführt wird, bei dem eine Temperatur innerhalb eines Aktivierungstemperaturbereichs liegt und an dem ein Reduktionsmittel in einer Menge gleich oder größer als ein vorbestimmter Wert für eine Adsorptionsmenge adsorbiert worden ist, und

wobei das NOx, das dem zweiten Katalysator zugeführt wird, NOx ist, das aufgrund einer Erhöhung einer Temperatur des ersten Katalysators von dem ersten Katalysator (4a) desorbiert worden ist, wobei der erste Katalysator NOx bis zu einer Temperatur gleich oder höher als eine Desorptionstemperatur, bei der eine Desorption von NOx von dem ersten Katalysator beginnt, speichert.

2. Abgassteuerungssystem nach Anspruch 1, wobei:

die elektronische Steuerungseinheit (10) dazu ausgestaltet ist, eine erste Bestimmungssteuerung auszuführen, um zu bestimmen, ob eine in dem ersten Katalysator (4a) gespeicherte NOx-Menge gleich oder größer als ein vorbestimmter Wert für eine Speichermenge ist,

die elektronische Steuerungseinheit (10) dazu ausgestaltet ist, eine zweite Bestimmungssteuerung auszuführen, um zu bestimmen, ob die Temperatur des zweiten Katalysators (6) innerhalb des Aktivierungstemperaturbereichs liegt, und um zu bestimmen, ob die Menge des an dem zweiten Katalysator (6) adsorbierten Reduktionsmittels gleich oder größer als der vorbestimmte Wert für eine Adsorptionsmenge ist,

die elektronische Steuerungseinheit (10) dazu ausgestaltet ist, die Temperatur des ersten Katalysators (4a) derart zu erhöhen, dass die Temperatur des ersten Katalysators (4a) gleich oder höher als die Desorptionstemperatur ist, wenn in jeder von sowohl der ersten Bestimmungssteuerung als auch der zweiten Bestimmungssteuerung eine affirmative Bestimmung erfolgt,

die elektronische Steuerungseinheit (10) dazu ausgestaltet ist, eine dritte Bestimmungssteuerung auszuführen, um zu bestimmen, ob die Temperatur des ersten Katalysators gleich oder höher als die Desorptionstemperatur ist, und

die elektronische Steuerungseinheit (10) dazu ausgestaltet ist, zu bestimmen, dass die Voraussetzung für eine Bewertung erfüllt ist, und die NOx-Reduktionsleistung des zweiten Katalysators (6) auf der Basis des von dem ersten NOx-Sensor (N2) erfassten Werts und des von dem zweiten NOx-Sensor (N3) erfassten Werts zu bewerten, wenn in der dritten Bestimmungssteuerung eine affirmative Bestimmung erfolgt.

3. Abgassteuerungssystem nach Anspruch 2, wobei:

die elektronische Steuerungseinheit (10) dazu ausgestaltet ist, eine vierte Bestimmungssteuerung auszuführen, um zu bestimmen, ob der erste NOx-Sensor (N2) und der zweite NOx-Sensor (N3) normal arbeiten, und

die elektronische Steuerungseinheit (10) dazu ausgestaltet ist, die Temperatur des ersten Katalysators (4a) zu erhöhen, wenn in jeder von sowohl der ersten Bestimmungssteuerung, der zweiten Bestimmungssteuerung als auch der vierten Bestimmungssteuerung eine affirmative Bestimmung erfolgt.

4. Abgassteuerungssystem nach einem der Ansprüche 1 bis 3, wobei:

die elektronische Steuerungseinheit (10) dazu ausgestaltet ist, eine fünfte Bestimmungssteuerung auszuführen, um zu bestimmen, ob die NOx-Speicherleistung des ersten Katalysators (4a) durch Erhöhen der Temperatur des ersten Katalysators (4a) wiederhergestellt wurde, und

die elektronische Steuerungseinheit (10) dazu ausgestaltet ist, ein Erhöhen der Temperatur des ersten Katalysators zu stoppen, wenn in der fünften Bestimmungssteuerung eine affirmative Bestimmung erfolgt.

**5.** Verfahren zur Steuerung eines Abgassteuerungssystems für einen Verbrennungsmotor (1), wobei das Abgassteuerungssystem beinhaltet: einen ersten Katalysator (4a), der an einem Abgaskanal für den Verbrennungsmotor (1) angeordnet ist, wobei der erste Katalysator (4a) ein NOx-Speicherreduktionskatalysator ist, einen zweiten Katalysator (6), der an dem Abgaskanal an einer Position stromabwärts des ersten Katalysators (4a) angeordnet ist, wobei der zweite Katalysator (6) ein NOx-selektiver katalytischer Reduktionskatalysator ist, einen ersten NOx-Sensor (N2), der an dem Abgaskanal an einer Position zwischen dem ersten Katalysator (4a) und dem zweiten Katalysator (6) montiert ist, einen zweiten NOx-Sensor (N3), der an dem Abgaskanal an einer Position stromabwärts des zweiten Katalysators (6) montiert ist, und eine elektronische Steuerungseinheit (10),

wobei der erste NOx-Sensor (N2) dazu ausgestaltet ist, eine NOx-Konzentration in Abgas, das in den zweiten Katalysator (6) strömt, zu erfassen, und

der zweite NOx-Sensor (N3) dazu ausgestaltet ist, eine NOx-Konzentration in Abgas, das aus dem zweiten Katalysator (6) heraus strömt, zu erfassen,

wobei das Verfahren ein Bewerten einer NOx-Reduktionsleistung des zweiten Katalysators (6) auf der Basis eines von dem ersten NOx-Sensor (N2) erfassten Werts und eines von dem zweiten NOx-Sensor (N3) erfassten Werts durch die elektronische Steuerungseinheit (10) umfasst, wenn eine Voraussetzung für eine Bewertung erfüllt ist, wobei die Voraussetzung für eine Bewertung eine Voraussetzung ist, dass NOx dem zweiten Katalysator (6) zugeführt wird, von dem eine Temperatur innerhalb eines Aktivierungstemperaturbereichs liegt und an dem ein Reduktionsmittel in einer Menge gleich oder größer als ein vorbestimmter Wert für eine Adsorptionsmenge adsorbiert worden ist, und

wobei das NOx, das dem zweiten Katalysator zugeführt wird, NOx ist, das aufgrund einer Erhöhung einer Temperatur des ersten Katalysators von dem ersten Katalysator (4a) desorbiert worden ist, wobei der erste Katalysator NOx bis zu einer Temperatur gleich oder höher als eine Desorptionstemperatur, bei der eine Desorption von NOx von dem ersten Katalysator beginnt, speichert.

## Revendications

**1.** Système de commande de gaz d'échappement pour un moteur à combustion interne (1), le système de commande de gaz d'échappement comportant :

un premier catalyseur (4a) disposé sur un passage d'échappement pour le moteur à combustion interne (1), le premier catalyseur (4a) étant un catalyseur de réduction de stockage de NOx ;

un deuxième catalyseur (6) disposé sur le passage d'échappement dans une position en aval du premier catalyseur (4a), le deuxième catalyseur (6) étant un catalyseur de réduction catalytique sélective de NOx ;

un premier capteur de NOx (N2) monté sur le passage d'échappement dans une position entre le premier catalyseur (4a) et le deuxième catalyseur (6), le premier capteur de NOx (N2) étant configuré pour détecter une concentration en NOx dans du gaz d'échappement s'écoulant dans le deuxième catalyseur (6) ;

un deuxième capteur de NOx (N3) monté sur le passage d'échappement dans une position en aval du deuxième catalyseur (6), le deuxième capteur de NOx (N3) étant configuré pour détecter une concentration en NOx dans le gaz d'échappement s'écoulant hors du deuxième catalyseur (6) ; et

une unité de commande électronique (10) configurée pour, quand une condition d'évaluation est satisfaite, évaluer une performance de réduction de NOx du deuxième catalyseur (6) sur la base d'une valeur détectée par le premier capteur de NOx (N2) et une valeur détectée par le deuxième capteur de NOx (N3),

la condition d'évaluation étant une condition telle que du NOx est délivré au deuxième catalyseur (6) dont une température est dans une plage de températures d'activation et sur lequel un agent de réduction dans une quantité égale ou supérieure à une valeur prédéterminée de quantité d'adsorption a été adsorbé, et

le NOx délivré au deuxième catalyseur étant du NOx qui a été désorbé du premier catalyseur (4a) du fait d'une augmentation d'une température du premier catalyseur, le premier catalyseur stockant du NOx, jusqu'à une température égale ou supérieure à une température de désorption à laquelle une désorption du NOx du premier catalyseur commence.

**2.** Système de commande de gaz d'échappement selon la revendication 1, dans lequel :

l'unité de commande électronique (10) est configurée pour exécuter une première commande de détermination destinée à déterminer si une quantité de NOx stockée dans le premier catalyseur (4a) est égale ou supérieure à une valeur prédéterminée de quantité de stockage ;

l'unité de commande électronique (10) est configurée pour exécuter une deuxième commande de détermination destinée à déterminer si la température du deuxième catalyseur (6) est dans la plage de températures d'activation et déterminer si la quantité d'agent de réduction adsorbé sur le deuxième catalyseur (6) est égale ou supérieure à la valeur prédéterminée de quantité d'adsorption ;

l'unité de commande électronique (10) est configurée pour augmenter la température du premier catalyseur (4a) de telle sorte que la température du premier catalyseur (4a) est égale ou supérieure à la température de désorption, quand une détermination affirmative est faite dans chacune des deux première commande de détermination et deuxième commande de détermination ;

l'unité de commande électronique (10) est configurée pour exécuter une troisième commande de détermination destinée à déterminer si la température du premier catalyseur est égale ou supérieure à la température de désorption ; et

l'unité de commande électronique (10) est configurée pour déterminer que la condition d'évaluation est satisfaite et évaluer la performance de réduction de NOx du deuxième catalyseur (6) sur la base de la valeur détectée par le premier capteur de NOx (N2) et de la valeur détectée par le deuxième capteur de NOx (N3), quand une détermination affirmative est faite dans la troisième commande de détermination.

3. Système de commande de gaz d'échappement selon la revendication 2, dans lequel :

l'unité de commande électronique (10) est configurée pour exécuter une quatrième commande de détermination destinée à déterminer si le premier capteur de NOx (N2) et le deuxième capteur de NOx (N3) fonctionnent normalement ; et

l'unité de commande électronique (10) est configurée pour augmenter la température du premier catalyseur (4a), quand une détermination affirmative est faite dans chacune de la totalité de la première commande de détermination, de la deuxième commande de détermination, et de la quatrième commande de détermination.

4. Système de commande de gaz d'échappement selon l'une quelconque des revendications 1 à 3, dans lequel :

l'unité de commande électronique (10) est configurée pour exécuter une cinquième commande de détermination destinée à déterminer si la performance de stockage de NOx du premier catalyseur (4a) a été récupérée en augmentant la température du premier catalyseur (4a) ; et

l'unité de commande électronique (10) est configurée pour arrêter d'augmenter la température du premier catalyseur, quand une détermination affirmative est faite dans la cinquième commande de détermination.

5. Procédé de commande d'un système de commande de gaz d'échappement pour un moteur à combustion interne (1), le système de commande de gaz d'échappement comprenant : un premier catalyseur (4a) disposé sur un passage d'échappement pour le moteur à combustion interne (1), le premier catalyseur (4a) étant un catalyseur de réduction de stockage de NOx ; un deuxième catalyseur (6) disposé sur le passage d'échappement dans une position en aval du premier catalyseur (4a), le deuxième catalyseur (6) étant un catalyseur de réduction catalytique sélective de NOx ; un premier capteur de NOx (N2) monté sur le passage d'échappement dans une position entre le premier catalyseur (4a) et le deuxième catalyseur (6) ; un deuxième capteur de NOx (N3) monté sur le passage d'échappement dans une position en aval du deuxième catalyseur (6) ; et une unité de commande électronique (10), le premier capteur de NOx (N2) étant configuré pour détecter une concentration en NOx dans du gaz d'échappement qui s'écoule dans le deuxième catalyseur (6), et

le deuxième capteur de NOx (N3) étant configuré pour détecter une concentration en NOx dans le gaz d'échappement qui s'écoule hors du deuxième catalyseur (6),

le procédé comportant l'évaluation, par l'unité de commande électronique (10), de la performance de réduction de NOx du deuxième catalyseur (6) sur la base d'une valeur détectée par le premier capteur de NOx (N2) et d'une valeur détectée par le deuxième capteur de NOx (N3), quand une condition d'évaluation est satisfaite,

la condition d'évaluation étant une condition telle que du NOx est délivré au deuxième catalyseur (6) dont une température est dans une plage de températures d'activation et sur lequel un agent de réduction dans une quantité égale ou supérieure à une valeur prédéterminée de quantité d'adsorption a été adsorbé, et

le NOx délivré au deuxième catalyseur étant du NOx qui a été désorbé du premier catalyseur (4a) du fait d'une augmentation d'une température du premier catalyseur, le premier catalyseur stockant du NOx, jusqu'à une température égale ou supérieure à une température de désorption à laquelle la désorption du NOx à partir du premier catalyseur commence.

# FIG. 1

EP 3 401 522 B1

# FIG. 2A

HIGH

NOx REDUCTION RATE [%]

NORMAL
USE RANGE

EVALUATION
EXECUTION RANGE A

HIGH

$\alpha$

TEMPERATURE OF NSR CATALYST 4a [°C]

# FIG. 2B

HIGH

NOx REDUCTION RATE [%]

NORMAL
USE RANGE

EVALUATION
EXECUTION
RANGE B

HIGH

TEMPERATURE OF SCR CATALYST 6 [°C]

# FIG. 3

START

S1 READ NOx STORAGE AMOUNT

S3 NOx STORAGE AMOUNT ≥ STORAGE AMOUNT PREDETERMINED VALUE?
— NO
— YES

S5 READ NH₃ ADSORPTION AMOUNT

S7 NH₃ ADSORPTION AMOUNT ≥ ADSORPTION AMOUNT PREDETERMINED VALUE?
— NO
— YES

S9 IS TEMPERATURE OF SCR CATALYST 6 WITHIN EVALUATION EXECUTION RANGE B?
— NO
— YES

S11 IS NOx SENSOR NORMALLY OPERATING?
— NO
— YES

S13 EXECUTE TEMPERATURE-INCREASING PROCESS

S15 IS TEMPERATURE OF NSR CATALYST 4a WITHIN EVALUATION EXECUTION RANGE A?
— NO
— YES

S17 CALCULATE NOx REDUCTION RATE

S19 NOx REDUCTION RATE ≥ REDUCTION RATE PREDETERMINED VALUE?
— NO
— YES

S21 DETERMINE THAT SCR CATALYST 6A IS NORMALLY OPERATING

S23 DETERMINE THAT SCR CATALYST 6A IS MALFUNCTIONING

S25 READ NOx STORAGE AMOUNT

S27 NOx STORAGE AMOUNT ≤ LOWER LIMIT?
— NO
— YES

S29 STOP TEMPERATURE-INCREASING PROCESS

END

# FIG. 4

EXECUTION FLAG

ON

OFF

TEMPERATURE OF NSR CATALYST 4a

DESORPTION START TEMPERATURE $\alpha$

NOx STORAGE AMOUNT: LARGE

CONCENTRATION OF NOx AT POSITION DOWNSTREAM OF NSR CATALYST 4a

NOx STORAGE AMOUNT: SMALL

t1   t2   t3

TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016223441 A
- US 20160230628 A
- US 20160230628 A1